# EUROPEAN PATENT SPECIFICATION

(11) **EP 3 665 659 B1**
(45) Date of publication and mention of the grant of the patent: **20.12.2023**
(21) Application number: 18728236.3
(22) Date of filing: 04.05.2018
(51) Int. Cl.: G07C 3/00, B65B 1/00

(54) **PACKAGING MACHINE, AND CONTROL METHOD OF THE SAME**
VERPACKUNGSMASCHINE UND STEUERUNGSVERFAHREN DAFÜR
MACHINE D'EMBALLAGE, ET SON PROCÉDÉ DE COMMANDE

(30) Priority: 04.05.2017 IT 201700048348
(43) Date of publication of application: 17.06.2020
(73) Proprietor: Logomat S.r.l., 40065 Pianoro (Bologna) (IT)
(72) Inventor: SIMONI, Gian Luca, 40065 Pianoro (Bologna) (IT)
(74) Representative: Minghetti, Mauro
(86) International application number: PCT/IB2018/053109
(87) International publication number: WO 2018/203291

(56) References cited:
- EP-A1- 1 638 054
- US-A- 4 542 479

## Description

### TECHNICAL FIELD OF THE INVENTION

The present invention concerns a packaging machine.

Furthermore, the present invention concerns a control method of the same packaging machine.

More in detail, the present invention concerns a packaging machine comprising several functional groups, and the control method thereof, which allow to overcome the possible failure or malfunction of one or more of the operating stations comprised in each functional group.

### BACKGROUND ART

As is known in various product areas, such as for example the pharmaceutical, cosmetic, food, chemical, and others without any particular limitations, the products are packaged - in single units or in groups that include a predefined number or a predefined quantity by weight - in cases, bottles, vials, or the like, made of the most suitable materials for specific applications.

The packaging operations are carried out by special automatic machines, usually designed and built to operate for a specific type of product and the relevant packaging.

Such automatic machines usually comprise a given number of functional groups, which operate synergetically and in synchronism to perform the necessary operations of inserting the products, closing the packages, and/or any other operating step necessary for obtaining the desired result.

More in detail, each of the functional groups of the machine normally comprises, in turn, a plurality of operating stations; each of these operating stations is suitable to interact, for example, with a single product, or group of products, or with a single package or casing in which the product or products must be inserted, in relation to the specific situation.

Naturally, the greater the number of operating stations of each functional group of the machine and the higher the productivity of same.

In a typical packaging machine, which carries out the packaging of products inside box-shaped cases, at least one group for feeding/storage of the products, a group for gripping the individual cases (possibly with deformation/opening to obtain the correct insertion configuration), a group for inserting the products into their respective cases, and an output group for the cases containing the respective products (and in which, if necessary, also closing of the same cases is carried out) are provided.

As mentioned above, the brief description above is provided by way of example only, as there are various other types of machine that operate on different products, and/or different packages or casings (for example bottles, vials, envelopes, and others).

In machines of this type, which may comprise even a very high number of operating stations distributed in several functional groups, one of the most troublesome drawbacks is the fault, or even the malfunction, of even just one of the operating stations of any one of the functional groups.

Normally, these machines - or at least the most modern and evolved among them - comprise, in each of the functional groups, sensors or groups of sensors, which have the task of ensuring that each of the operating stations has correctly carried out its function.

For example, in the case of a machine that packs products in box-type cases, in the gripping units of the individual cases one or more sensors are present which check that each station of the group itself has correctly picked a respective case from the magazine, and/or has opened/deformed it to bring it to the correct configuration for insertion of the respective product.

In the same way, in the other functional groups there are respective sensors - or systems of sensors - that check that each operating station has correctly performed its task.

In machines of a known type, during the normal production cycle, if a given operating station fails, or starts to malfunction for some reason, a special sensor ascertain this event almost instantaneously, and immediately sends an error signal to the machine control unit.

This error signal can be managed in different ways, depending on the severity of the fault or malfunction.

In less severe cases, the machine may also continue to operate, and all the products processed by the malfunctioning operating station may show certain defects, which up to certain extents could also be tolerated.

However, normally - or at least in most cases - an error signal of this type causes the machine to stop, so as to allow operators to perform the necessary operations.

These operations may consist of a short resetting (for example, in the event of a simple product or package jam, etc.), or in the most severe cases, they consist in actual repairs or replacements of mechanical parts.

The latter possibility may require a machine stop for quite a long time, which obviously results in financial losses which may be of a not negligible amount for the manager of the production plant.

To minimise the damage resulting from these production failures, presently many operating stations are designed so that the mechanical parts that work directly in contact with the products, or with the packages or casings for such products, can be easily removed and then replaced in the shortest possible time, if necessary.

However, even these recent technical evolutions do not allow frequent machine stops to be avoided, or prolonged shutdowns in the event that spare parts and/or qualified personnel are not available.

This is true even more given the fact that the current design trends go in the direction of a constant increase in production speed, which also leads to inevitably increased faults and jams.

EP 1 638 054 discloses a method for detecting and managing faults in industrial machines, comprising the steps of: detecting the faulty component by way of a plurality of sensors distributed on the machine, detecting all the operating units that, during the operation of the machine, interact with the faulty component, determining the instant when each one of the units interact with the faulty component, disabling each one of the units in the respective determined instant of interaction, and making the machine operate at a reduced rate, with all the units that interact with the faulty component disabled, in the respective instant of interaction, until the fault is suppressed.

### OBJECTS OF THE INVENTION

The technical aim of the present invention is to improve the state of the art.

Within such technical aim, it is an object of the present invention to provide a packaging machine which allows the aforementioned drawbacks to be overcome.

Another object of the present invention is to make a packaging machine available that allows production stops due to faults or malfunctions of one or more operating stations to be considerably limited with respect to what is currently happening in traditional machines.

Another object of the present invention is to implement a packaging machine in which the influence of a possible fault or malfunction of one or more production stations of the machine itself is reduced to a minimum.

A further object of the present invention is to devise a packaging machine that allows the above goals to be achieved with a solution characterised by low costs and also applicable to existing and/or pre-installed machines.

This aim and these objects are achieved by the packaging machine according to the attached claim 1 and by the method of attached claim 9.

The machine comprises at least one central control unit and a plurality of functional groups suitable to operate synergistically and in synchronism in order to obtain the desired product packaging result.

These functional groups comprise at least one product feeding group, at least one feeding and/or forming group for the packages in which the products are to be inserted (for example, in blister packaging machines, the package is obtained from a reel), at least one group for inserting the products into their respective packages, at least one output group of the packages containing the respective products; each of these groups comprises respective operating stations suitable to perform, each in turn, a specific operation on the products, on the packages or on the combination thereof, in order to obtain a given result in terms of products packaging.

The central control unit comprises means for identifying at least one malfunctioning or faulty operating station, and first means for deactivating said malfunctioning or faulty operating station.

Dependent claims refer to preferred and advantageous embodiments of the invention.

### BRIEF DESCRIPTION OF DRAWINGS.

The features of the invention will be better understood by any person skilled in the art from the following description and accompanying drawings, provided by way of non-limiting example, in which:

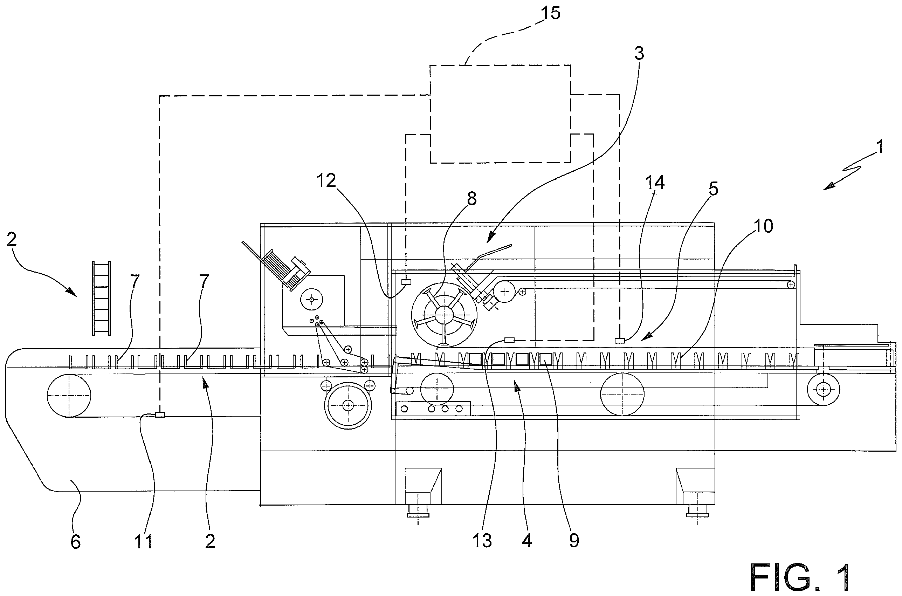

Figure 1 is a schematic front view of a packaging machine according to the present invention.

### EMBODIMENTS OF THE INVENTION.

With reference to the accompanying figure 1, a packaging machine according to the present invention is wholly indicated with 1.

Only as an example and not by way of limitation, and for the sole purpose of better understanding, the packaging machine 1 shown in the attached figure 1 is a so-called cartoning machine, in which the individual products are inserted, in single units or in groups, in respective packs consisting of box-shaped cases.

Such cases can be made, for example, of cardboard, or of polymeric material, or of other suitable materials.

The products to be inserted into cases can be any products, without any limitation for the purposes of the present invention.

In other embodiments of the invention, the packaging machine 1 could be, for example, a filling machine, in which the packages consist of bottles, vials, tubes or the like.

As already pointed out, the particular application, or intended use of the packaging machine 1 does not constitute a limitation of the inventive concept underlying the present invention.

The machine 1 comprises a plurality of functional groups 2,3,4,5.

The functional groups 2-5 are all supported, for example, by one same base 6.

The functional groups 2-5 of the machine 1 are suitable for operating synergetically and in synchronism, so as to obtain the desired product packaging result.

More in detail, the functional groups 2-5 comprise at least one product feeding group 2.

The function of the product feeding group 2 is to collect/store the products to be packaged to convey them, as individual units or as groups of predetermined number/weight, to the subsequent functional groups within the operating flow, as better clarified below.

From a constructive point of view, the product feeding group 2 can have any shape suitable for handling and manipulating the specific products for which the machine is designed.

Also the arrangement of the product feeding group 2 within the machine can be in any way, according to specific application requirements.

The functional groups 2-5 further comprise at least one package feeding/forming group 3, in which the products have to be inserted.

The package feeding/forming group 3 has the function of collecting/storing the packages of products and then conveying them to the downstream functional groups, within the scope of the operating flow.

From a constructive point of view, the product feeding group 3 can also have any shape suitable for handling and manipulating specific packages or casings in which the products have to be inserted.

The arrangement of the packaging feeding and/or forming group 3, within the machine, can also be in any way according to the specific characteristics of the packages themselves and/or of the products.

The functional groups 2-5 further comprise at least one insertion group 4 of the products in their respective packages.

The operating modes of the insertion group 4 can be any.

For example, insertion can occur via an element that pushes the product inside the package according to a certain direction of insertion, or it can occur by gravity, or in any other way, without any particular limitations.

The functional groups 2-5 also comprise an outlet group 5 of packages containing respective products.

The function of the outlet group 5 is to transport/convey the packages, already filled with respective products, to a downstream operating area of the production plant.

For example, the packages containing the respective products may be transported/directed to specific machines that carry out further packaging steps (for example, boxing, palletising, or other).

The outlet group 5 may also comprise elements suitable for closing/sealing each package after the respective product has been inserted (for example, closing the flaps of a cardboard case).

The mutual arrangement of the functional groups 2-5 within the machine 1 can be any according to the processed product and/or the packaging method to which it has to be submitted.

Each of the functional groups 2,3,4,5 described above comprises respective operating stations 7,8,9,10.

These operating stations 7-10, in relation to the functional group 2-5 to which they belong, operate exclusively on the products, or exclusively on the packages, or on the combination of same; more in detail, each of the operating stations 7-10 performs a certain operation or processing on the products, on the packages, or on the combination of same, which is functional to obtaining a given result in terms of packaging of the products.

For example, in a specific case of a cartoning machine, each station 8 of the package feeding group 3 picks up a respective package consisting of a case in such a way as to position it in the correct direction and configuration for the subsequent insertion of the products.

Each operating station 7-10, therefore, has its own construction and functional characteristics that determine its specific role in the production flow.

Naturally, the control methods of each of the aforesaid operating stations 7-10 also vary according to the specific roles of same.

Each of the functional groups 2,3,4,5 described above comprises respective sensors 11,12,13,14, or sensor systems, which control the operation in relation to the specific function within the production flow.

The sensor groups or systems 11,12,13,14 are associated with each operating station 7-10 of the various functional groups 2-5.

For example, within the product supply group 2, special sensors 11 ensure that each operating station 7 of the group 2 supplies one respective product; within the insertion group 4, special sensors 13 ensure that each product is actually inserted inside the respective package.

In other words, and more generally, each functional group 2-5 of the machine 1 comprises special sensors 11-14 which ensure that each operating station 7-10 correctly performs its function.

The packaging machine 1 comprises a central control unit 15.

The machine 1 further comprises an operator panel, operatively connected to the central control unit 15.

The central control unit 15 manages and coordinates the operation of the various functional groups 2-5 of the machine 1.

According to an aspect of the invention, the central control unit 15 comprises means for identifying at least one malfunctioning or faulty operating station 7-10.

According to another aspect of the invention, the central control unit 15 of the machine 1 comprises first means for deactivating the above mentioned malfunctioning or faulty operating station 7-10.

By deactivation it is meant, in the present description, that the malfunctioning or faulty operating station 7-10 is not involved in the packaging cycle (i.e. it is in actual fact skipped or bypassed).

According to yet another aspect of the invention, the central control unit 15 comprises second deactivation means of all the operating stations 7-10 intended to cooperate, directly or indirectly, with the aforementioned malfunctioning or faulty operating station 7-10 within each packaging cycle (such stations 7-10, directly or indirectly cooperating, are then also skipped, so as to maintain the synchronism of the groups 2-5 of the machine).

As better explained hereinafter, this solution allows the machine to be kept operating also in the case of at least one malfunctioning or faulty operating station 7-10, since the latter is deactivated, i.e. it is not affected by the flow of products or packages.

In addition, as mentioned, also the operating stations 7-10 that cooperate directly or indirectly with the latter within the production flow are deactivated (either skipped, or bypassed), so that production can continue normally, at the pre-established speed, by involving the intact operating stations 7-10.

This measure can be better understood by considering that in the automatic packaging machines all the functional groups 2-5 work in perfect synchronism so that the various respective operating stations 7-10 are always in the correct positions for interacting with each other, for example by transferring products or packages, etc.

Due to the number of operating stations 7-10 of each functional group 2-5 (in fact, some groups 2-5 may have a higher number of stations than others, for construction or functional reasons), it is possible to establish, for each cycle of the machine 1, which is the sequence of operating stations 7-10 of the various groups 2-5 that are directly involved in the packaging of a product.

This sequence being known, for each operating cycle of the machine 1 it is therefore possible to disable (or override) all the operating stations 7-10 directly or indirectly cooperating with the faulty or malfunctioning one.

In other words, the central control unit 15, within each packaging cycle, provides to leaving inactive (or deactivating) the faulty and malfunctioning operating station 7-10 and all those directly or indirectly cooperating with it, upstream and downstream of the production flow, so as not to affect these stations with the feeding of products or packages.

The machine continues to operate normally, but skipping one packaging cycle at the faulty and malfunctioning operating station 7-10.

This result is definitely advantageous because - as mentioned - the machine is not stopped, but can continue to work - albeit at a lower overall production rate - until the plant manager establishes the right time to control an inevitable resetting or repairing stop.

It should be noted that, especially in the case of machines with a high number of operating stations 7-10, the decrease in production speed (in terms of products packaged per minute), due to the application of this inventive concept, is very modest.

According to another aspect of the invention, the central control unit 15 comprises means of statistical verification of the error/malfunction signals coming from the above mentioned sensors 11-14 during the operation of the machine.

According to this aspect of the invention, the central control unit 15, after having identified, statistically, the malfunctioning station or stations 7-10, is programmed to automatically deactivate the same station or the same stations 7-10; alternatively, the central control unit 15 can be programmed to stop the machine directly, and to indicate to the operator which stations 7-10 are to be deactivated manually.

More in detail, the central control unit 15 is able to perform a sort of statistical check of all the error/malfunction signals coming from the above mentioned sensors 11-14 during the operation of the machine, so as to identify the operating station 7-10 responsible for the production cycles that were not successful.

In other words, this statistical identification occurs following a predetermined number of consecutive, or substantially consecutive, error signals involving a specific operating station 7-10, sent by the sensors 11-14 to the central control unit 15 (so that there is no possibility of error); in practice, in a situation such as this, the central control unit 15 receives, for each malfunctioning operating station 7-10, an error, or malfunction, signal for each production cycle (as was said, consecutively or almost consecutively).

As a consequence of this - and in relation to how it had been programmed - the central control unit 15 stops the machine 1, so as to allow the operators to carry out the necessary maintenance operations, directly in the group 2-5 and in the station 7-10 concerned; or, the central control unit 15 disables the involved station 7-10.

According to another possible solution according to the invention, it is provided that the central control unit 15 is programmed so as to identify the products that have been processed by the malfunctioning operating station(s) 7-10, so as to distinguish them from the others in the subsequent production phases.

This solution does not in any way alter the production speed of the machine 1: the products thus identified (which could therefore be potentially faulty, or in any case do not comply with the requirements, or more generally present differences compared to others) can then possibly be separated from the others to carry out further checks or, more generally, be directed to different destinations.

The identification of the products can be done through a special algorithm run by the central control unit 15.

This algorithm can provide, for example, that all the products processed by the machine 1 are numbered progressively, and that the numbers corresponding to these products are saved to a special memory, for subsequent processing.

Or, the identification of the products can also occur physically on them, for example through a special operating station that carries out the marking (with a label, or with a notch, or with another suitable technique).

According to yet another aspect of the invention, the central control unit 15 can comprise means for increasing the nominal production speed of the functional group 2-5 in which the operating station 7-10 is malfunctioning or faulty (previously identified, for example through statistical verification, and possibly also already deactivated) so as to compensate, within the production flow, the deactivation of this malfunctioning or faulty operating station 7-10.

In other words, after identifying and (if necessary) deactivating the malfunctioning or faulty operating station 7-10, the central control unit 15 increases the nominal production speed of the functional group 2-5 containing this malfunctioning or faulty station 7-10: in this way, the functional group 2-5 concerned can reach operating synchronism with the remaining groups 2-5 of the machine, and the empty cycle that involves all the groups, according to the previous described version, is thus avoided.

More in detail, according to the invention, the nominal production speed of the functional group 2-5 containing the malfunctioning or faulty operating station 7-10 is increased by a factor that depends on the ratio between the total number of operating stations 7-10 provided in the functional group 2-5 and the number of operating stations 7-10 which, within this functional group 2-5, actually operate in a normal way without faults or malfunctions.

In one embodiment of the invention, this factor can be exactly constituted by the above mentioned ratio between the total number of operating stations 7-10 provided in the functional group 2-5 and the number of operating stations 7-10 which, within this functional group 2-5, actually operate in a normal way without faults or malfunctions.

For example, if a certain functional group 2-5 comprises eight operating stations 7-10, but four of them are faulty, the operating speed of this functional group 2-5 will have to be doubled in order to obtain operative synchronism with the remaining functional groups 2-5 of the machine 1.

The necessary condition for this solution to be implemented is that the functional group 2-5 in which the malfunctioning or faulty operating station 7-10 is provided is never operated, under nominal conditions, at its maximum possible speed.

In other words, the functional group 2-5 in which the malfunctioning or faulty operating station 7-10 is provided is always operating at a nominal speed which, compared to its maximum possible speed, provides a fraction at a value always lower than one (and sufficiently lower than one).

In practice, this means that the nominal operating speed of the functional group 2-5 in which the malfunctioning or faulty operating station 7-10 is provided can be further increased, by a certain value, without reaching the maximum allowed value.

This will obviously be possible up to a certain number of faulty operating stations 7-10 within a given functional group 2-5, and this limit number is established precisely by the ratio between the nominal group speed 2-5 and its maximum reachable speed.

In this way the machine productivity is not affected.

However, as mentioned, this solution is applicable only to certain types of functional groups 2-5.

A control method of a packaging machine 1 is also an object of the present invention.

In an embodiment of the invention of particular practical interest, the packaging machine 1 is the one having the characteristics previously described.

In this specific embodiment, the method according to the invention comprises a step of identifying at least one malfunctioning or faulty operating station 7-10 and disabling said malfunctioning or faulty operating station 7-10.

This identification step is performed by means of sensors 11-14, or sensor systems 11-14, suitable for ensuring that each respective operating station 7-10 correctly performs its function, and suitable for signalling any faults or malfunctions to the central control unit 15 of the machine.

Furthermore, the method comprises a step of deactivating all the operating stations 7-10 designed to cooperate, directly or indirectly, with the aforementioned malfunctioning or faulty operating station 7-10 within each packaging cycle.

The method also comprises a step of stopping, and indicating to the operator which station 7-10 is to be deactivated manually, or of automatically deactivating production after a predetermined number of fault or malfunction signals coming from said sensors 11-14 (or sensor systems 11-14) of one of said functional groups 2-5.

In an alternative embodiment of the method according to the invention a step is provided to increase the nominal production speed of the functional group 2-5 comprising said malfunctioning or faulty operating station 7-10, so as to compensate, within the production flow, the deactivation of said malfunctioning or faulty operating station 7-10, and so that the productivity of the machine 1 is not affected.

In the present method, the increase in the speed of the functional group 2-5 comprising said malfunctioning or faulty operating station 7-10 occurs according to the modes previously described regarding the features of the machine 1.

In general, it should be noted that the central control unit 15 of the machine can manage its operation, in case of fault or malfunctioning, according to at least three modes.

The first mode is automatic: whenever the machine stops, due to a problem on a specific operating station 7-10, the central control unit 15 is programmed to run a statistic on all the stops caused by the respective functional group 2-5; in the event that the parameters exceed the preset thresholds, the central control unit 15 will send a message to the operator with the instruction to disable that given station 7-10, and will alert the maintenance staff to check the station concerned.

The second mode is semi-automatic: the operator removes the faulty 7-10 station; the central control unit 15 is programmed to sense the absence of such station 7-10, and to bypass the feeding of the product intended to be managed by said station 7-10.

In this way, the damaged and removed station 7-10 will never be used in production operations.

The third mode is manual: the operator, through a dedicated page on the operator panel, can indicate which is the faulty station; and the central control unit 15 is programmed to bypass the feeding of the product intended to be managed by said station 7-10.

In this way, the damaged and removed station 7-10 will never be used in production operations.

It has thus been seen how the invention achieves the intended purposes.

Construction and functional solutions are proposed intended to limit, or prevent, the stopping of the machine in case of fault or malfunction of one of the operating stations.

The proposed solutions are advantageous as they affect the productivity of the machine in a truly minimal way.

The necessary stop to repair or replace mechanical parts can thus be planned by the system operator at their own convenience, in order to limit the damage due to loss of production.

The proposed solutions are constructively simple and cheap, and can also be provided on machines already built or already operating in the production plant.

The present invention has been described according to preferred embodiments, but various equivalent versions are possible still within the scope of the appended claims.

## Claims

1. Machine (1) for packaging products in respective packages or casings, comprising at least one central control unit (15) and a plurality of functional groups (2,3,4,5) suitable to operate synergistically and in synchronism so as to obtain the desired product packaging result, said functional groups (2,3,4,5) comprising at least one product feeding group (2), at least one feeding and/or forming group (3) of the packages in which the products are to be inserted, at least one insertion group (4) of the products in the respective packages, at least one outlet group (5) of the packages containing the respective products, each of said groups (2,3,4,5) comprising respective operating stations (7,8,9,10) each suitable to carry out a specific operation on the products, on the packages or on the combination thereof, so as to obtain a specific result in terms of product packaging, said central control unit (15) comprising means for the identification of at least one malfunctioning or faulty operating station (7,8,9,10), and first deactivation means of said malfunctioning or faulty operating station (7,8,9,10), said central control unit (15) comprising means for increasing the production speed of the functional group (2,3,4,5) comprising said malfunctioning or faulty operating station (7,8,9,10), so as to bring it into operating synchronism with the other functional groups (2,3,4,5) and to compensate, within the production flow, the deactivation of said malfunctioning or faulty operating station (7,8,9,10), **characterized in that** said increasing means are suitable to increase the nominal production speed of the functional group (2,3,4,5), comprising said malfunctioning or faulty operating station (7,8,9,10), of a factor exactly constituted by the ratio between the total number of operating stations (7,8,9,10) provided in said functional group (2,3,4,5) and the number of operating stations (7,8,9,10) which, within said functional group (2,3,4,5), actually operate in a normal way without faults or malfunctions.

2. Machine according to claim 1, in which each of said functional groups (2,3,4,5) comprises respective sensors (11,12,13,14) or sensor systems (11,12,13,14), suitable to verify that each respective operating station (7,8,9,10) will correctly execute its own function, and suitable to report to said central control unit (15) possible faults or malfunctions of at least one operating station (7,8,9,10).

3. Machine according to claim 1 or 2, in which said central control unit (15) comprises second deactivation means of all the operating stations (7,8,9,10) intended to cooperate, directly or indirectly, with the aforesaid malfunctioning or faulty operating station (7,8,9,10) deactivated by said first deactivation means within each packaging cycle.

4. Machine according to claim 2, wherein said central control unit (15) comprises means of statistical verification of the error/malfunction signals coming from said sensors (11,12,13,14) during the operation of the machine, to identify one or more malfunctioning operating stations (7,8,9,10).

5. Machine according to claim 4, wherein said central control unit (15) is suitable to statistically identify one or more operating stations (7,8,9,10) upon receipt of a predetermined number of consecutive, or substantially consecutive, error/malfunction signals involving a certain operating station (7,8,9,10), sent by said sensors (11,12,13,14).

6. Machine according to claim 5, further comprising an operator panel, operatively connected to said central control unit (15), in which, whenever the machine (1) stops due to a problem on a specific operating station (7,8,9,10), said central control unit (15) is programmed to run a statistical verification on all the stops caused by the respective functional group (2,3,4,5), and in the event that the verified parameters exceed the preset thresholds, said central control unit (15) is programmed to send, through said operator panel, a message to the operator with the instruction to disable said operating station (7,8,9,10).

7. Machine according to one of claims 1-5, wherein upon manual removal of a malfunctioning operating station (7,8,9,10), said central control unit (15) is programmed to sense the absence of said operating station (7,8,9,10), and to bypass the feeding of the product intended to be managed by said operating station (7,8,9,10).

8. Machine according to one of claims 1-5, further comprising an operator panel, operatively connected to said central control unit (15), wherein said operator panel comprises a page for selecting the malfunctioning operating station (7,8,9,10), said central control unit (15) being programmed to bypass the feeding of the product intended to be managed by said malfunctioning operating station (7,8,9,10) selected by the user.

9. Control method of a machine (1) for packaging products in respective packages or casings, comprising at least one central control unit (15) and a plurality of functional groups (2,3,4,5) suitable to operate synergistically and in synchronism so as to obtain the desired product packaging result, said functional groups (2,3,4,5) comprising at least one product feeding group (2), at least one feeding and/or forming group (3) of the packages in which the products are to be inserted, at least one insertion group (4) of the products in the respective packages, at least one outlet group (5) of the packages containing the respective products, each of said groups (2,3,4,5) comprising respective operating stations (7,8,9,10) each suitable to carry out a specific operation on the products, on the packages or on the combination thereof, so as to obtain a specific result in terms of product packaging, the method comprising the steps of identifying at least one malfunctioning or faulty operating station (7,8,9,10), to deactivating said malfunctioning or faulty operating station (7,8,9,10), and a step of increasing the nominal production speed of the functional group (2,3,4,5) comprising said malfunctioning or faulty operating station (7,8,9,10) so as to bring it into operative synchronism with the other functional groups (2,3,4,5) and to compensate, within the production flow, the deactivation of said malfunctioning or faulty operating station (7,8,9,10), **characterized in that** said nominal production speed of said functional group (2,3,4,5) comprising said malfunctioning of faulty operating station (7,8,9,10) is increased of a factor exactly constituted by the ratio between the total number of operating stations (7,8,9,10) provided in said functional group (2,3,4,5) and the number of operating stations (7,8,9,10) which, within said functional group (2,3,4,5), actually operate in a normal way without faults or malfunctions.

10. Method according to claim 9, in which such step for identifying at least one malfunctioning or faulty operating station (7,8,9,10) is carried out by means of sensors (11,12,13,14), or sensor systems (11,12,13,14), suitable to verify that each respective operating station (7,8,9,10) will correctly execute its own function, and suitable to report, to said central control unit (15), possible faults or malfunctions of at least one station (7,8,9,10).

11. Method according to claim 9 or 10, comprising a step of deactivating of all operating stations (7,8,9,10) intended to cooperate, directly or indirectly, with the aforesaid malfunctioning or faulty operating station (7,8,9,10) within each packaging cycle.

## Patentansprüche

1. Maschine (1) zum Verpacken von Produkten in jeweilige Packungen oder Behälter, umfassend mindestens eine zentrale Steuereinheit (15) und eine Vielzahl von Funktionsgruppen (2, 3, 4, 5), die geeignet sind, synergetisch und synchron zu arbeiten, um das gewünschte Produktverpackungsergebnis zu erhalten, wobei die besagten Funktionsgruppen (2, 3, 4, 5) mindestens eine Produktzuführungsgruppe (2), mindestens eine Zuführungs- und/oder Formungsgruppe (3) der Packungen, in die die Produkte eingeführt werden sollen, mindestens eine Einführungsgruppe (4) der Produkte in die jeweiligen Packungen, mindestens eine Auslassgruppe (5) der die jeweiligen Produkte enthaltenden Packungen umfassen, wobei jede der besagten Gruppen (2, 3, 4, 5) jeweilige Arbeitsstationen (7, 8, 9, 10) umfasst, die jeweils geeignet sind, einen spezifischen Vorgang an den Produkten, an den Packungen oder an der Kombination davon auszuführen, um ein spezifisches Ergebnis in Bezug auf die Produktverpackung zu erhalten, wobei die besagte zentrale Steuereinheit (15) Mittel zur Identifizierung von mindestens einer fehlerhaften oder gestörten Arbeitsstation (7, 8, 9, 10) und erste Deaktivierungsmittel der besagten fehlerhaften oder gestörten Arbeitsstation (7, 8, 9, 10) umfasst, wobei die besagte zentrale Steuereinheit (15) Mittel zur Erhöhung der Produktionsgeschwindigkeit der Funktionsgruppe (2, 3, 4, 5), die die besagte fehlerhafte oder gestörte Arbeitsstation (7, 8, 9, 10) aufweist, umfasst, um sie mit den anderen Funktionsgruppen (2, 3, 4, 5) in Betriebssynchronismus zu bringen und um die Deaktivierung der besagten fehlerhaften oder gestörten Arbeitsstation (7, 8, 9, 10) innerhalb des Produktionsflusses zu kompensieren, **dadurch gekennzeichnet, dass** die besagten Erhöhungsmittel geeignet sind, die nominale Produktionsgeschwindigkeit der Funktionsgruppe (2, 3, 4, 5), die die besagte fehlerhafte oder gestörte Arbeitsstation (7, 8, 9, 10) aufweist, um einen Faktor zu erhöhen, der genau durch das Verhältnis zwischen der Gesamtzahl der Arbeitsstationen (7, 8, 9, 10), die in der besagten Funktionsgruppe (2, 3, 4, 5) vorgesehen sind, und der Anzahl der Arbeitsstationen (7, 8, 9, 10), die innerhalb der besagten Funktionsgruppe (2, 3, 4, 5) tatsächlich auf normale Weise ohne Störungen oder Fehlfunktionen arbeiten, gebildet wird.

2. Maschine nach Anspruch 1, in der jede der besagten Funktionsgruppen (2, 3, 4, 5) jeweilige Sensoren (11, 12, 13, 14) oder Sensorsysteme (11, 12, 13, 14) umfasst, die geeignet sind, zu überprüfen, ob jede jeweilige Arbeitsstation (7, 8, 9, 10) ihre eigene Funktion richtig ausführt, und die geeignet sind, der besagten zentralen Steuereinheit (15) mögliche Störungen oder Fehlfunktionen mindestens einer Arbeitsstation (7, 8, 9, 10) zu melden.

3. Maschine nach Anspruch 1 oder 2, in der die besagte zentrale Steuereinheit (15) zweite Deaktivierungsmittel aller Arbeitsstationen (7, 8, 9, 10) umfasst, die dazu bestimmt sind, direkt oder indirekt mit der vorgenannten gestörten oder fehlerhaften Arbeitsstation (7, 8, 9, 10), die durch die besagten ersten Deaktivierungsmittel deaktiviert wird, innerhalb jedes Verpackungszyklus zusammenzuwirken.

4. Maschine nach Anspruch 2, worin die besagte zentrale Steuereinheit (15) Mittel zur statistischen Überprüfung der von den besagten Sensoren (11, 12, 13, 14) während des Betriebs der Maschine kommenden Fehler-/Fehlfunktionssignale umfasst, um eine oder mehrere fehlerhafte Arbeitsstationen (7, 8, 9, 10) zu identifizieren.

5. Maschine nach Anspruch 4, worin die besagte zentrale Steuereinheit (15) geeignet ist, eine oder mehrere Arbeitsstationen (7, 8, 9, 10) nach Empfang einer vorbestimmten Anzahl von aufeinanderfolgenden oder im Wesentlichen aufeinanderfolgenden Fehler-/Fehlfunktionssignalen bezüglich einer bestimmten Arbeitsstation (7, 8, 9, 10), die von den besagten Sensoren (11, 12, 13, 14) gesendet werden, statistisch zu identifizieren.

6. Maschine nach Anspruch 5, die ferner ein Bedienfeld umfasst, das funktionsmäßig mit der besagten zentralen Steuereinheit (15) verbunden ist, an der, wann immer die Maschine (1) aufgrund eines Problems an einer bestimmten Arbeitsstation (7, 8, 9, 10) stoppt, die besagte zentrale Steuereinheit (15) programmiert ist, eine statistische Überprüfung aller von der jeweiligen Funktionsgruppe (2,3, 4, 5) verursachten Stopps durchzuführen, und, für den Fall, dass die überprüften Parameter die voreingestellten Schwellenwerte überschreiten, die besagte zentrale Steuereinheit (15) programmiert ist, über das besagte Bedienfeld eine Nachricht an den Bediener mit der Anweisung, die besagte Arbeitsstation (7, 8, 9, 10) zu deaktivieren, zu senden.

7. Maschine nach einem der Ansprüche 1 - 5, worin nach manueller Entfernung einer fehlerhaften Arbeitsstation (7, 8, 9, 10) die besagte zentrale Steuereinheit (15) programmiert ist, das Nichtvorhandensein der besagten Arbeitsstation (7, 8, 9, 10) zu erfassen und die Zuführung des Produkts, das durch die besagte Arbeitsstation (7, 8, 9, 10) gehandhabt werden soll, zu umgehen.

8. Maschine nach Anspruch 1 - 5, ferner umfassend ein Bedienfeld, das betriebsmäßig mit der besagten zentralen Steuereinheit (15) verbunden ist, worin das besagte Bedienfeld eine Seite zur Auswahl der fehlerhaften Arbeitsstation (7, 8, 9, 10) umfasst, wobei die besagte zentrale Steuereinheit (15) so programmiert ist, dass sie die Zuführung des Produkts, das durch die besagte vom Benutzer ausgewählte fehlerhafte Arbeitsstation (7, 8, 9, 10) gehandhabt werden soll, umgeht.

9. Steuerverfahren einer Maschine (1) zum Verpacken von Produkten in jeweilige Packungen oder Behälter, umfassend mindestens eine zentrale Steuereinheit (15) und eine Vielzahl von Funktionsgruppen (2, 3, 4, 5), die geeignet sind, synergetisch und synchron zu arbeiten, um das gewünschte Produktverpackungsergebnis zu erhalten, wobei die besagten Funktionsgruppen (2, 3, 4, 5) mindestens eine Produktzuführungsgruppe (2), mindestens eine Zuführungs- und/oder Formungsgruppe (3) der Packungen, in die die Produkte eingeführt werden sollen, mindestens eine Einführungsgruppe (4) der Produkte in die jeweiligen Packungen, mindestens eine Auslassgruppe (5) der die jeweiligen Produkte enthaltenden Packungen umfassen, wobei jede der besagten Gruppen (2, 3, 4, 5) jeweilige Arbeitsstationen (7, 8, 9, 10) umfasst, die jeweils geeignet sind, einen spezifischen Vorgang an den Produkten, an den Packungen oder an der Kombination davon auszuführen, um ein spezifisches Ergebnis in Bezug auf die Produktverpackung zu erhalten, wobei das Verfahren die Schritte der Identifizierung mindestens einer fehlerhaften oder gestörten Arbeitsstation (7, 8, 9, 10) zur Deaktivierung der besagten fehlerhaften oder gestörten Arbeitsstation (7, 8, 9, 10) und einen Schritt der Erhöhung der nominalen Produktionsgeschwindigkeit der Funktionsgruppe (2, 3, 4, 5), die die besagte fehlerhafte oder gestörte Arbeitsstation (7, 8, 9, 10) aufweist, umfasst, um sie mit den anderen Funktionsgruppen (2, 3, 4, 5) in Betriebssynchronismus zu bringen und um die Deaktivierung der besagten fehlerhaften oder gestörten Arbeitsstation (7, 8, 9, 10) innerhalb des Produktionsflusses zu kompensieren, **dadurch gekennzeichnet, dass** die besagte nominale Produktionsgeschwindigkeit der besagten Funktionsgruppe (2, 3, 4, 5), die die besagte fehlerhafte oder gestörte Arbeitsstation (7, 8, 9, 10) aufweist, um einen Faktor erhöht wird, der genau durch das Verhältnis zwischen der Gesamtzahl der Arbeitsstationen (7, 8, 9, 10), die in der besagten Funktionsgruppe (2, 3, 4, 5) vorgesehen sind, und der Anzahl der Arbeitsstationen (7, 8, 9, 10), die innerhalb der besagten Funktionsgruppe (2, 3, 4, 5) tatsächlich auf normale Weise ohne Störungen oder Fehlfunktionen arbeiten, gebildet wird.

10. Verfahren nach Anspruch 9, in dem dieser Schritt der Identifizierung mindestens einer fehlerhaften oder gestörten Arbeitsstation der besagten Funktionsgruppen (2, 3, 4, 5) mithilfe von Sensoren (11, 12, 13, 14) oder Sensorsystemen (11, 12, 13, 14) ausgeführt wird, die geeignet sind, zu überprüfen, ob jede jeweilige Arbeitsstation (7, 8, 9, 10) ihre eigene Funktion richtig ausführt, und die geeignet sind, der besagten zentralen Steuereinheit (15) mögliche Störungen oder Fehlfunktionen mindestens einer Station (7, 8, 9, 10) zu melden.

11. Verfahren nach Anspruch 9 oder 10, umfassend die Schritte der Deaktivierung aller Arbeitsstationen (7, 8, 9, 10), die dazu bestimmt sind, direkt oder indirekt mit der vorgenannten gestörten oder fehlerhaften Arbeitsstation (7, 8, 9, 10) innerhalb jedes Verpackungszyklus zusammenzuwirken.

## Revendications

1. Machine (1) pour l'emballage de produits dans des emballages ou des boîtes respectifs, comprenant au moins une unité de commande centrale (15) et une pluralité de groupes fonctionnels (2, 3, 4, 5) aptes à fonctionner en synergie et en synchronisation de manière à obtenir le résultat souhaité pour l'emballage du produit, lesdits groupes fonctionnels (2, 3, 4, 5) comprenant au moins un groupe d'alimentation du produit (2), au moins un groupe d'alimentation et/ou de formage (3) des emballages dans lesquels les produits doivent être insérés, au moins un groupe d'insertion (4) des produits dans les emballages respectifs, au moins un groupe de sortie (5) des emballages contenant les produits respectifs, chacun desdits groupes (2, 3, 4, 5) comprenant des postes opérationnels respectifs (7, 8, 9, 10) chacun étant apte à effectuer une opération spécifique sur les produits, sur les emballages ou sur la combinaison de ceux-ci, de manière à obtenir un résultat spécifique en termes d'emballage du produit, ladite unité de commande centrale (15) comprenant des moyens permettant d'identifier au moins un poste opérationnel défectueux ou défaillant (7, 8, 9, 10) et les premiers moyens de désactivation dudit poste opérationnel défectueux ou défaillant (7, 8, 9, 10), ladite unité de commande centrale (15) comprenant des moyens permettant d'augmenter la vitesse de production du groupe fonctionnel (2, 3, 4, 5) comprenant ledit poste opérationnel défectueux ou défaillant (7, 8, 9, 10), afin de le mettre en synchronisation opérationnelle avec les autres groupes fonctionnels (2, 3, 4, 5) et de compenser, dans le flux de production, la désactivation dudit poste opérationnel défectueux ou défaillant (7, 8, 9, 10), **caractérisé en ce que** lesdits moyens croissants sont aptes à augmenter la vitesse nominale de production du groupe fonctionnel (2, 3, 4, 5), comprenant ledit poste opérationnel défectueux ou défaillant (7, 8, 9, 10), d'un facteur exactement constitué par le rapport entre le nombre total de postes opérationnels (7, 8, 9, 10) fournis dans ledit groupe fonctionnel (2, 3, 4, 5) et le nombre de postes opérationnels (7, 8, 9, 10) qui, à l'intérieur dudit groupe fonctionnel (2, 3, 4, 5), fonctionnent effectivement de manière normale sans défaillances ni dysfonctionnements.

2. Machine selon la revendication 1, dans laquelle chacun desdits groupes fonctionnels (2, 3, 4, 5) comprend des capteurs (11, 12, 13, 14) ou des systèmes de capteurs (11, 12, 13, 14) respectifs, aptes à vérifier que chaque poste opérationnel respectif (7, 8, 9, 10) exécutera correctement sa propre fonction, et aptes à signaler à ladite unité de commande centrale (15) les défauts ou dysfonctionnements éventuels d'au moins un poste opérationnel (7, 8, 9, 10).

3. Machine selon la revendication 1 ou 2, dans laquelle ladite unité de commande centrale (15) comprend un deuxième moyen de désactivation de tous les postes opérationnels (7, 8, 9, 10) destiné à coopérer, directement ou indirectement, avec le poste opérationnel défectueux ou défaillant susmentionné (7, 8, 9, 10) désactivé par ledit premier moyen de désactivation au cours de chaque cycle d'emballage.

4. Machine selon les revendications 2, dans laquelle ladite unité de commande centrale (15) comprend des moyens de vérification statistique des signaux d'erreur/dysfonctionnement provenant desdits capteurs (11, 12, 13, 14) pendant le fonctionnement de la machine, afin d'identifier un ou plusieurs postes opérationnels défectueux (7, 8, 9, 10).

5. Machine selon la revendication 4, dans laquelle ladite unité de commande centrale (15) est apte à identifier statistiquement un ou plusieurs postes opérationnels (7, 8, 9, 10) à la réception d'un nombre prédéterminé de signaux d'erreur/dysfonctionnement consécutifs, ou sensiblement consécutifs, impliquant un certain poste opérationnel (7, 8, 9, 10), envoyés par lesdits capteurs (11, 12, 13, 14).

6. Machine selon la revendication 5, comprenant en outre un panneau de commande, relié de manière opérationnelle à ladite unité de commande centrale (15), dans laquelle, chaque fois que la machine (1) s'arrête en raison d'un problème sur un poste opérationnel spécifique (7, 8, 9, 10), ladite unité de commande centrale (15) est programmée pour exécuter une vérification statistique sur tous les arrêts causés par le groupe fonctionnel respectif (2, 3, 4, 5), et dans le cas où les paramètres vérifiés dépassent les seuils prédéfinis, ladite unité de commande centrale (15) est programmée pour envoyer, via ledit panneau de commande, un message à l'opérateur avec l'instruction de désactiver ledit poste opérationnel (7, 8, 9, 10).

7. Machine selon l'une des revendications 1 à 5, dans laquelle, lors du retrait manuel d'un poste opérationnel défectueux (7, 8, 9, 10), ladite unité de commande centrale (15) est programmée pour détecter l'absence dudit poste opérationnel (7, 8, 9, 10) et pour contourner l'alimentation du produit destiné à être géré par ledit poste opérationnel (7, 8, 9, 10).

8. Machine selon l'une des revendications 1 à 5, comprenant en outre un panneau de commande, relié de manière opérationnelle à ladite unité de commande centrale (15), dans laquelle ledit panneau de commande comprend une page de sélection du poste opérationnel défectueux (7, 8, 9, 10), ladite unité de commande centrale (15) étant programmée pour contourner l'alimentation du produit destiné à être géré par ledit poste opérationnel défectueux (7, 8, 9, 10) sélectionné par l'utilisateur.

9. Procédé de commande d'une machine (1) pour l'emballage de produits dans des emballages ou des boîtes respectifs, comprenant au moins une unité de commande centrale (15) et une pluralité de groupes fonctionnels (2, 3, 4, 5) aptes à fonctionner en synergie et en synchronisation afin d'obtenir le résultat souhaité pour l'emballage du produit, lesdits groupes fonctionnels (2, 3, 4, 5) comprenant au moins un groupe d'alimentation du produit (2), au moins un groupe d'alimentation et/ou de formage (3) des emballages dans lesquels les produits doivent être insérés, au moins un groupe d'insertion (4) des produits dans les emballages respectifs, au moins un groupe de sortie (5) des emballages contenant les produits respectifs, chacun desdits groupes (2, 3, 4, 5) comprenant des postes opérationnels respectifs (7, 8, 9, 10) chacun apte à effectuer une opération spécifique sur les produits, sur les emballages ou sur la combinaison de ceux-ci, de manière à obtenir un résultat spécifique en termes d'emballage du produit, le procédé comprenant les étapes d'identification d'au moins un poste opérationnel défectueux ou défaillant (7, 8, 9, 10), la désactivation dudit poste opérationnel défectueux ou défaillant (7, 8, 9, 10), et une étape d'augmentation de la vitesse de production nominale du groupe fonctionnel (2, 3, 4, 5) comprenant ledit poste opérationnel défectueux ou défaillant (7, 8, 9, 10) de manière à le mettre en synchronisation opérationnelle avec les autres groupes fonctionnels (2, 3, 4, 5) et pour compenser, dans le flux de production, la désactivation dudit poste opérationnel défectueux ou défaillant (7, 8, 9, 10), **caractérisé en ce que** ladite vitesse de production nominale dudit groupe fonctionnel (2, 3, 4, 5) comprenant ledit poste opérationnel défectueux ou défaillant (7, 8, 9, 10) est augmentée d'un facteur exactement constitué par le rapport entre le nombre total de postes opérationnels (7, 8, 9, 10) fournis dans ledit groupe fonctionnel (2, 3, 4, 5) et le nombre de postes opérationnels (7, 8, 9, 10) qui, à l'intérieur dudit groupe fonctionnel (2, 3, 4, 5), fonctionnent effectivement de manière normale sans défaillances ni dysfonctionnements.

10. Procédé selon la revendication 9, dans lequel une telle étape d'identification d'au moins un poste opérationnel défectueux ou défaillant (7, 8, 9, 10) est effectuée au moyen de capteurs (11, 12, 13, 14) ou de systèmes de capteurs (11, 12, 13, 14), adaptés pour vérifier que chaque poste opérationnel respectif (7, 8, 9, 10) exécutera correctement sa propre fonction, et aptes à signaler à ladite unité de commande centrale (15), les défaillances ou dysfonctionnements possibles d'au moins un poste (7, 8, 9, 10).

11. Procédé selon la revendication 9 ou 10, comprenant une étape de désactivation de tous les postes opérationnels (7, 8, 9, 10) destinés à coopérer, directement ou indirectement, avec le poste opérationnel défectueux ou défaillant susmentionné (7, 8, 9, 10) au cours de chaque cycle d'emballage.
